# EUROPEAN PATENT APPLICATION

(11) **EP 2 572 612 A1**
(43) Date of publication of application: **27.03.2013**
(21) Application number: 11182442.1
(22) Date of filing: 23.09.2011
(51) Int. Cl.: A47J 31/54

(54) **Heater for beverage preparation machines and method for manufacturing the same**

(71) Applicant: Nestec S.A., 1800 Vevey (CH)
(72) Inventor: Jaccard, Alain, 1450 Ste-Croix (CH)
(74) Representative: Sivier, Damien

(57) **Abstract**

An electrical heater for beverage preparation machines provided with at least one flow through heating element comprising a metallic body through which at least one internal channel is arranged for circulation of a fluid in contact with internal walls of said internal channel according to a predetermined path between an inlet and an outlet positioned on the body of the heating element. The flow through heating element is characterized in that at least the internal walls of the internal channel are coated by a layer of a material having at least a property to prevent scale deposition on said internal walls, said property together with heat conductivity of the layer material being enhanced through a combination of parameters including cross section, shape and path geometry of the internal channel, the nature and the surface quality of the layer material, and fluid circulation speed in the internal channel. A further object of the invention includes a method for manufacturing in an efficient way a flow through heating element.

## Description

### Field of the invention

The invention relates to the field of the beverage preparation machines, in particular using capsules containing an ingredient for preparing a beverage. The present invention focuses on a flow through heater having a surface treatment for limiting the deposition of scale, applied mainly on inner walls of fluid channels traversing a heater element and of pipes conducting the fluid to and from the heater element.

For the purpose of the present description, a "beverage" is meant to include any human-consumable liquid substance, such as coffee, tea, hot or cold chocolate, milk, soup, baby food or the like. A "capsule" is meant to include any pre-portioned beverage ingredient or combination of ingredients (hereafter called "ingredient") within an enclosing packaging of any suitable material such as plastic, aluminum, a recyclable and/or bio-degradable material and combinations thereof, including a soft pod or a rigid cartridge containing the ingredient.

### Technical background

Conventional electric water heaters are made up of elongated heating elements comprising an outer tubular sleeve enclosing a wired electrical resistance. In a typical element, the internal metallic resistance wire is surrounded by a material such as magnesium oxide which is an electrical insulator but is capable of a relatively high heat transfer rate. The outer sleeve may be formed of a metal such as copper, brass or stainless steel. The thermal energy passes from the hot resistance wire through the insulating material and the sleeve wall to the sleeve surface, thereby heating the water. Over time electric water heater elements tend to develop a scale or calcium carbonate layer, which is a poor heat conductor. The heating element has a high heat conductivity so the low thermal conductivity of the scale layer tends to cause the heating element to overheat, which can lead to failure of the heating element. Also, the growth of scale layer on the element may physically deform the element and cause failure. Finally, as a scale layer becomes thick it tends to release solid particles from the element and into the heated water and pipes which may be blocked.

Various solutions have been proposed to solve the problems created by scaling of heating elements. For example, the power density is reduced so that scale will form at a lower rate, thus extending the life time of the heating element. This may be accomplished by using a resistance wire of lower electrical power, or increasing the sleeve diameter and/or its length. The drawback of this method are that an element of greater surface area is required, causing difficulties for fitting the element into smaller heater tanks, or increasing the cost through enlarged element size.

Document US6262401 B discloses a self-cleaning water heater element which is plated with a layer of gold such that the gold surface has a low surface roughness. The smooth gold surface inhibits scale formation on the water heater element. The gold-plated smooth-surfaced water heater element may be manufactured by coating a standard water heater element with an adhesion layer, electroplating a layer of bright nickel on the adhesion layer, and electroplating a gold layer on top of the bright nickel.

Document EP1251192A discloses a method for producing a heating body comprising steps of: (i) forming a body made from stainless steel; (ii) making the surface in contact with the liquid corrosion resistant; and (iii) providing the corrosion resistant surface with a deposit-preventing layer. According to a preferred embodiment, the heating body is made from a high alloyed stainless steel which is made corrosion resistant, preferably by electrolytically applying nickel or thermally diffusing nickel. The nickel coating having a thickness of more than 5 micron provides an adhesive layer for an additional coating of gold on the top of it. The roughness of the gold layer is specified as Rₐ below 0.762 micron.

### Summary of the invention

An object of the invention is to provide a heater having an optimal heat transfer between a heating element and a fluid flowing through an internal channel by combining properties of the surface treatment material with dimensioning of the channel allowing a fast heating of the fluid by consuming a minimum of energy.

Another aim of the invention is to provide an efficient surface treatment at low manufacturing costs of relative small flow through heating elements comprising an internal channel in which the fluid is heated by circulating through the heating element at a given speed.

One or more of these objects are met by a heater according to claim 1 and dependent claims providing embodiments having features achieving the desired aims. A method for manufacturing in an efficient way a flow through heating element comprising a particular surface treatment process according to claim 10 and dependent claims further provide solutions to these objects and/or additional benefits.

The heater according to the present invention may comprise one or more flow through heating elements. In case of a heater including a plurality of flow through heating elements, they may be assembled with linking pipes in such a way that the internal channels of each element are either connected in parallel, in series or a combination thereof.

### Brief description of the drawings

The invention will be better understood with the following detailed description, which refers to the attached figure given as a non-limitative example.
Figure 1 shows an inner sleeve of a flow through heating element comprising a groove forming a helix starting at one end of the inner sleeve and ending at the other end of the inner sleeve.
Figure 2 shows a perspective view of the inner sleeve of figure 1
Figure 3 shows a longitudinal cross sectional view of a flow through heating element with the fluid channel forming a helix linking the fluid inlet to the fluid outlet.
Figures 4a, 4c show embodiments of inner sleeves comprising flat surface portions arranged longitudinally from one to the other end of the inner sleeve and corresponding transversal cross sectional views of assemblies made up of inner sleeves enclosed in outer sleeves.
Figure 4b shows an embodiment of an inner sleeve comprising grooves arranged longitudinally from one to the other end of the inner sleeve and a corresponding transversal cross sectional view of an assembly made up of the inner sleeve enclosed in an outer sleeve.
Figure 4d shows an embodiment of an inner sleeve comprising concave surface portions arranged longitudinally from one to the other end, the inner sleeve and a corresponding transversal cross sectional view of an assembly made up of the inner sleeve enclosed in an outer sleeve.

### Detailed description of the invention

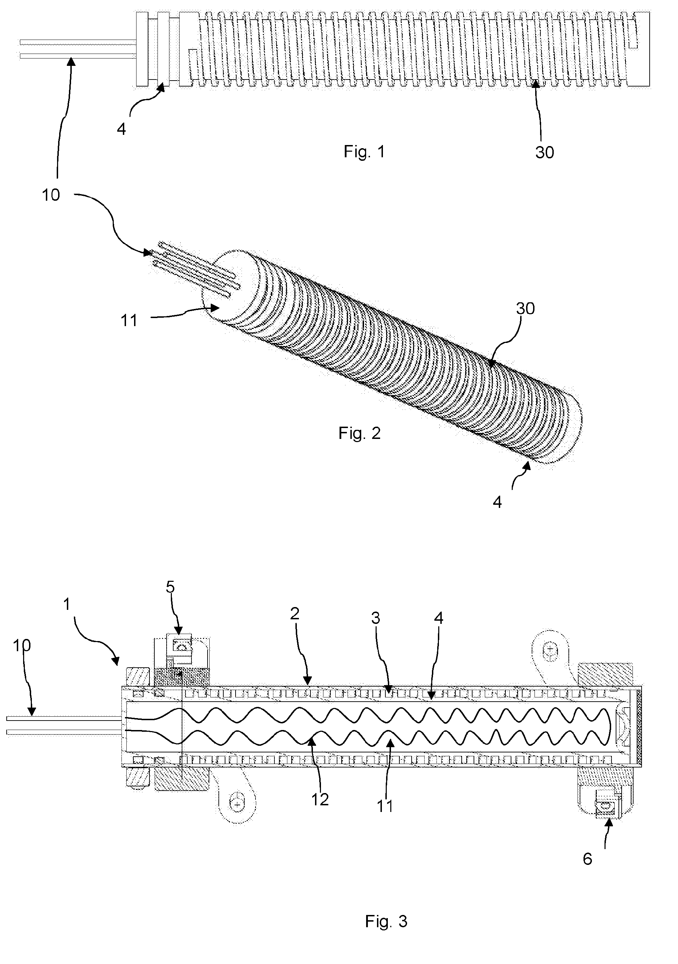

The invention applies preferably to flow through heating elements as the example represented by figure 3. Such flow through heating elements are generally used to heat water in beverage preparation machines before mixing with ingredients such as ground coffee, soluble coffee, leaf tea, soluble tea, herbal tea, dairy powder, culinary powder, baby food and combination thereof. These ingredients are preferably stored in capsules inserted in an appropriate orifice of the machine. During beverage preparation, the hot water flows under pressure through the capsule to produce the desired hot beverage.

Figure 3 shows an electrical flow through heating element 1 having a tubular shaped metallic body through which at least one internal channel 3 is arranged for circulation of a fluid (water) according to a predetermined continuous path between an inlet 5 and an outlet 6 positioned on the body of the heating element 1. The heat is produced by a coil shaped resistive wire 12 housed inside the body and separated from the fluid channel 3 by electrical insulating and heat conducting filling material 11 enclosing the wire 12.

Thanks to the conductivity of the metal of the body and the filling material 11 usually made up of compressed magnesium oxide, the heat is transferred to the fluid circulating at a certain speed in the channel 3. A cold fluid entering by the inlet 5 becomes thus hot by leaving the heating element by the outlet 6. The roles of the inlet 5 and the outlet 6 may be inverted, i.e. the fluid enters by the outlet 6 and comes out by the inlet 5.

In the aim to prevent scale deposition on the body and particularly the internal channel 3 which is made up of a metal such as brass, copper, steel, aluminum, etc. a treatment of at least the surfaces in contact with the fluid becomes necessary. In fact, the most metallic surfaces may be covered by a layer of scale over time especially when these surfaces are heated at high temperature and permanently in contact with water carrying mostly salts such as calcium carbonates or magnesium carbonates which tend to adhere against the internal walls or surfaces of the channel 3. This deposition forms a scale layer growing progressively until reducing notably the water flowing speed through the channel 3 or blocking the channel 3 in extreme cases. Sometimes particles of the scale layer may detach and obtrude either the channel or pipes connected to the heating element 1.

The flow through heating element manufacturing method comprises a surface treatment process consisting of depositing on at least the internal walls of the channel 3, the inlet 5, and the outlet 6 a layer of a material having at least a property to prevent scale deposition.

In addition said property together with heat conductivity of the layer material between the body and the fluid flowing through the channel is enhanced by determining a combination of parameters including cross section shape and path geometry of the channel 3, the nature and the surface quality of the layer material, and fluid circulation speed in the channel 3.

In an embodiment, all metallic surfaces of the heating element 1 may be coated by the material layer which is preferably constituted by a layer of nickel. Metallic pipes connected to the inlet 5 and outlet 6 of the heating element 1 may also be coated by the same material at least on their internal walls.

Several comparative tests with various surface coating materials have demonstrated that a layer of nickel complies in a best way with the requirement of low scale adherence. A nickel coating is also more economic than other metallic coatings such as chrome, zinc, titan, gold, etc. which require mostly intermediate layers of other metals depending on the metal of the channel to ensure an optimal adherence of the coating.

A nickel layer may be deposited by applying different techniques depending on the nature of the metal to coat and its surface quality, i.e. roughness and / or presence of micro scratches.

The nickel deposition is carried out either by spraying followed by heating, or by chemical vapor deposition in vacuum, or by electrolytically plating, or by heat transfusing and penetration in the surfaces, or by chemical deposition.

A preferred surface treatment process comprises chemical nickel phosphor (Ni-P) plating to form a layer having a thickness typically between 15 micron and 50 micron, and preferably sensibly around 30 micron giving a smooth surface to the layer, typically a roughness Ra below 0.3 micron. The main advantage of this process is that the nickel penetrates in every recess, scratches and porosities of the base metallic surface to form a regular and smooth surface on which scale cannot adhere. The surface thus obtained is also harder and mechanically more resistant than the one obtained with other nickel deposition techniques due to the presence of phosphor.

Furthermore a nickel layer complies with food compatibility standards as well as its property of chemical neutrality in presence of water or other comestible fluids wherein no toxic substances are generated by the nickel layer. Regulations and standards concerning health and environment are also respected by this surface treatment when considering recycling or destroying end of life or defective flow through heating elements.

The properties of heat conductivity and low scale adherence of the nickel layer are enhanced in an important way by geometrical parameters such as on one hand dimensions and shape of the channel cross section and on the other hand the shape, length and number of the paths formed by the channel 3 between the fluid inlet 5 and outlet 6. The fluid circulation speed depending on its initial pressure at the inlet 5 is also influenced by the geometrical parameters of the channel 3.

The heat transfer efficiency or the temperature of the fluid to reach at the outlet 6 of the flow through heating element 1 in a given time by consuming a minimum of energy is determined by dimensioning of the channel 3.

The heating element 1 manufacturing method of the invention comprises thus not only a step of protective layer deposition on the channel internal walls but also the determination of various parameters of the heating element 1: Three categories of parameters can thus be determined:
- dimensional parameters related to available space into a machine using the heating element, dimensions of the sleeves, grooves and flat or concave surface portions,
- structural parameters related to the shape of channel cross section, path, number of path segments of the channel,
- and functional parameters related to the fluid speed, heat conductivity and energy consumption.

A preferred embodiment of the electrical flow through heating element 1 shown by figure 3 has a tubular shaped metallic body comprising an inner sleeve 4 enclosing a wired electrical resistance 12 surrounded by an electrical insulating and heat conducting material 11. An outer sleeve 2 encloses the inner sleeve 4 which comprises at least one groove 30 or at least one flat or concave surface portion 7 arranged on the external surface from one end to the other of said inner sleeve 4. The at least one groove 30 or the at least one flat or concave surface portion 7 are configured in such a way to form a channel closed by the outer sleeve 2 enclosing said inner sleeve 4. The channel 3 is terminated at each end by an inlet 5 respectively by an outlet 6 intended for circulating a fluid according to a path formed by the channel 3. At least the internal walls of the channel 3, the inlet 5 and the outlet 6 are coated by a layer of material formed by the surface treatment process.

For example, figure 1 and 2 illustrate a channel made up of a helix groove 30 along a tubular inner sleeve 4 which is intended to be inserted in an outer sleeve 2 as shown by figure 3 to form a helix channel 3 which cross section is delimited by the groove walls and the outer sleeve 2 covering the groove 30. The pitch of the helix and the width and depth of the groove 30 determined by the length and diameter of the inner sleeve 4 influence the circulation speed and the throughput of the fluid.

The nickel surface treatment is applied at least on the external surface of the inner sleeve 4 including the helix groove and on the inner surface of the outer sleeve 2 which encloses the inner sleeve 4 to form the helix fluid channel 3.

The heat transfer rate is determined by the size of the surface in contact with the fluid and the heat conductivity between the resistive wire and the surfaces inside the channel. The number of turns of the helix (pitch) and the cross section area of the channel determine the total surface in contact with the fluid to the detriment of the fluid throughput. In fact, for example, a small cross section area of the channel allows a high number of turns of the helix but the fluid throughput or speed is lower at a given initial pressure of the fluid at the inlet in comparison to the throughput or speed with a large pitch helix and a large channel cross section area for a same diameter and length of the inner and outer sleeve.

According to another aspect, the scale deposition is also avoided when the fluid circulates at high speed in the channel because the dissolved substances are carried constantly away from the inlet to the outlet of the heating element. Therefore the smooth nickel coated inner surfaces of the channel together with a high circulation speed of the fluid contribute in an efficient way to prevent scale deposition.

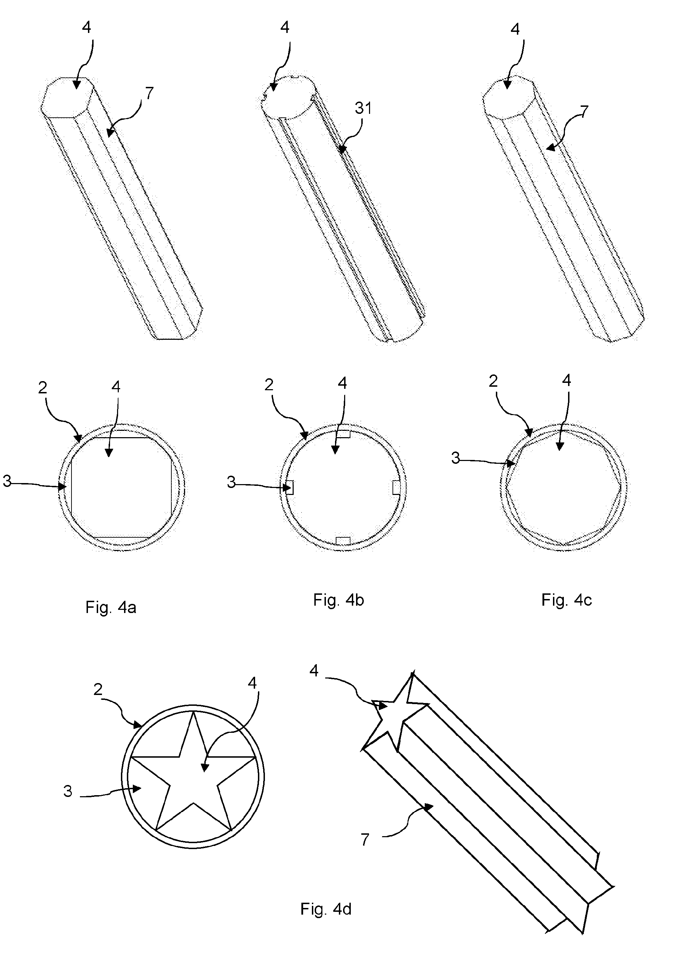

Figures 4a, 4b, 4c and 4d illustrate a further embodiment where the channel is formed by a plurality of longitudinal grooves or longitudinal flat or concave surface portions along the inner sleeve 4 converging at one end to the fluid inlet 5 and at the other end to the fluid outlet 6. The diameter of the outer sleeve 2 is determined in function of the basic largest diameter of the inner sleeve (fig 4a and fig 4b) or of a length of a polygon diagonal of the inner sleeve cross section (fig. 4c). The channel 3 is thus made up of several straight segments going from one end to the other of the heating element. Other shapes of the grooves or surface portions which may be concave (fig 4d) and other shapes of the segments which may be curved on the external surface of the inner sleeve can also be envisaged.

In a further embodiment the surface treatment process comprises depositing a layer of polytétrafluoroéthylène (PTFE), also called Teflon ®, on at least the external surface of the inner sleeve and on the internal surface of the outer sleeve, both sleeves fit together forming the fluid channel. A layer of this material has similar properties concerning corrosion, scale adherence, food compatibility, etc. than a layer of nickel except heat conductivity which is relatively low.

However, the heat transfer rate or heat conductivity can be improved in function of fluid circulation speed in the channel by a low thickness of the PTFE layer which is also determined according to the cross section shape and path geometry of the channel.

For heating a fluid circulating at high speed in the channel, depositing a nickel layer may be preferred as well as an extended channel cross section with multiple straight or curved segments for the channel path as shown by figures 4a, 4b, 4c or 4d.

In order to obtain the optimal properties of the channel through the heating element, a compromise is determined between all above discussed parameters.

An efficient method for manufacturing a flow through heating element of a heater for beverage preparation machines comprises steps of:
- providing a metallic tubular shaped first sleeve 4 having a closed end and an open end,
- inserting the first sleeve 4 into a metallic impression tube comprising at least one groove or at least one flat or concave surface portion arranged on the internal surface forming a continuous path going from one end to the other of said impression tube,
- inserting into the open end of the first sleeve 4 a coil of electrically resistive wire 12,
- filling the first sleeve with an electrical insulating and heat conducting material 11 by applying a pressure in such a way to deform the external surface of the first sleeve 4 which takes the exact shape of the at least one groove or the at least one flat or concave surface portion arranged on the internal surface of the impression tube,
- extracting the first sleeve 4 from the impression tube,
- sealing the open end of the first sleeve 4 where the ends of the coil of electrically resistive wire 12 come out,
- coating the external surface of the first sleeve 4 and the internal surface of a second sleeve 2 intended to enclose the first sleeve 4 by a surface treatment process providing a layer of a material having at least a property to prevent scale deposition,
- inserting the coated first sleeve 4 into the second metallic sleeve 2 dimensioned in such a way that the at least one groove 30 or the at least one flat or concave surface portion 7 arranged on the external surface of the first sleeve 2 forms a closed channel 3 when the second sleeve 4 encloses the first sleeve 2,
- arranging on the second sleeve 2 a fluid inlet 5 respectively a fluid outlet 6 at each end of the channel 3 previously formed to obtain a complete flow through heating element.

The dimensioning the channel 3 is performed in such a way to enhance the property to prevent scale deposition together with heat conductivity of the layer material through a combination of parameters including cross section, shape and path geometry of the channel 3, nature, thickness and surface quality of the layer material, and fluid circulation speed in the channel 3.

The using of a tube as an impression tool for forming the groove (s) or flat or concave surface portion (s) while compressing the filling material 11 into the first sleeve (inner sleeve of the finished heating element) saves manufacturing time and costs particularly when large series of heating elements are produced.

Depending on the shape of the groove the first sleeve is extracted either by pushing or pulling out or unscrewing in case of a helix groove from the impression tube. For other shapes or in general for more efficiency, the impression tube may be for example separable into two longitudinal halves allowing an easier extraction of the first sleeve 4.

## Claims

1. An electrical heater for beverage preparation machines provided with at least one flow through heating element (1) comprising a metallic body through which at least one internal channel (3) is arranged for circulation of a fluid in contact with internal walls of said internal channel (3) according to a predetermined continuous path between an inlet (5) and an outlet (6) positioned on the body of the heating element (1), **characterized in that** at least the internal walls of the internal channel (3) are coated by a layer of a material having at least a property to prevent scale deposition on said internal walls, said property together with heat conductivity of the layer material being enhanced through a combination of parameters including cross section, shape and path geometry of the internal channel, nature and surface quality of the layer material, and fluid circulation speed in the internal channel (3).

2. The electrical heater according to claim 1 **characterized in that** the flow through heating element (1) has a tubular shaped metallic body comprising an inner sleeve (4) enclosing a wired electrical resistance (12) surrounded by an electrical insulating and heat conducting material (11) and an outer sleeve (2) enclosing the inner sleeve (4), said inner sleeve (4) comprises at least one groove (31) or at least one flat or concave surface portion (7) arranged on the external surface from one end to the other of said inner sleeve (4), the at least one groove (31) or the at least one flat or concave surface portion (7) are configured in such a way to form a channel (3) closed by the outer sleeve (2) enclosing said inner sleeve (4), said channel (3) being terminated at each end by the inlet (5) respectively by the outlet (6).

3. The electrical heater according to claim 2 **characterized in that** the external surface of the inner sleeve (4) comprises a groove (31) forming an helix starting at one end of the inner sleeve (4) and ending at the other end of the inner sleeve (4).

4. The electrical heater according to claim 2 **characterized in that** the external surface of the inner sleeve (4) comprises a plurality of flat or concave surface portions (7) arranged longitudinally on the external surface of the inner sleeve (4) from one to the other end.

5. The electrical heater according to anyone of claim 1 to 4 **characterized in that** the material of the layer coating the internal walls of the internal channel (3) is selected to comply with food compatibility standards.

6. The electrical heater according to anyone of claim 1 to 5 **characterized in that** the material of the layer coating the internal walls of the internal channel (3) is selected to comply with health and environmental regulations and standards.

7. The electrical heater according to anyone of claim 1 to 6 **characterized in that** the material of the layer coating the internal walls of the internal channel (3) is made up of chemical nickel phosphor having a thickness typically between 15 micron and 50 micron.

8. The electrical heater according to claim 7 **characterized in that** the chemical nickel phosphor layer has a thickness of sensibly around 30 micron.

9. The electrical heater according to claim 7 or 8 **characterized in that** the chemical nickel phosphor layer has a surface roughness below 0.3 micron.

10. The electrical heater according to anyone of claim 1 to 6 **characterized in that** the material of the layer coating the internal walls of the internal channel (3) is made up of polytétrafluoroéthylène (PTFE) having a thickness determined according to the cross section shape and path geometry of the channel (3) to optimize heat conductivity in function of fluid circulation speed in the channel (3).

11. A method for manufacturing a flow through heating element (1) of a heater for beverage preparation machines, comprising steps of:
- providing a metallic tubular shaped first sleeve (4) having a closed end and an open end,
- inserting the first sleeve (4) into a metallic impression tube comprising at least one groove (31) or at least one flat or concave surface portion (7) arranged on the internal surface forming a continuous path going from one end to the other of said impression tube,
- inserting into the open end of the first sleeve (4) a coil of electrically resistive wire (12),
- filling the first sleeve with an electrical insulating and heat conducting material (11) by applying a pressure in such a way to deform the external surface of the first sleeve (4) which takes the exact shape of the at least one groove (31) or the at least one flat or concave surface portion (7) arranged on the internal surface of the impression tube,
- extracting the first sleeve (4) from the impression tube,
- sealing the open end of the first sleeve (4) where the ends of the coil of electrically resistive wire (12) come out,
- coating the external surface of the first sleeve (4) and the internal surface of a second sleeve (2) intended to enclose the first sleeve (4) by a surface treatment process providing a layer of a material having at least a property to prevent scale deposition,
- inserting the coated first sleeve (4) into the second sleeve (2) dimensioned in such a way that the at least one groove (31) or the at least one flat or concave surface portion (7) arranged on the external surface of the first sleeve (4) forms a closed channel (3) when the second sleeve (2) encloses the first sleeve (4),
- arranging on the second sleeve (2) a fluid inlet (5) respectively a fluid outlet (6) at each end of the channel (3) previously formed to obtain a complete flow through heating element (1).

12. The method according to claim 11 **characterized in that** it comprises a step of dimensioning the channel (3) in such a way to enhance the property to prevent scale deposition together with heat conductivity of the layer material through a combination of parameters including cross section, shape and path geometry of the channel (3), nature, thickness and surface quality of the layer material, and fluid circulation speed in the channel (3).

13. The method according to claim 11 or 12 **characterized in that** the step of coating the external surface of the first sleeve (4) and the internal surface of the second sleeve (2) comprises depositing a nickel layer by one of the processes in the group of spraying followed by heating, or chemical vapor deposition in vacuum, or electrolytically plating, or heat transfusing and penetration in the surfaces.

14. The method according to anyone of claims 11 to 13 **characterized in that** the surface treatment process comprises a chemical nickel phosphor (Ni-P) plating to form a layer having a thickness of sensibly around 30 micron and a smooth surface with a roughness below 0.3 micron.

15. The method according to claim 11 or 12 **characterized in that** the surface treatment process comprises depositing a layer of polytétrafluoroéthylène (PTFE) having a thickness determined according to the cross section shape and path geometry of the channel (3) to optimize heat conductivity in function of fluid circulation speed in the channel (3).
